# EUROPÄISCHE PATENTSCHRIFT

(11) **EP 3 031 666 B1**
(45) Veröffentlichungstag und Bekanntmachung des Hinweises auf die Patenterteilung: **15.01.2020**
(21) Anmeldenummer: 15188285.9
(22) Anmeldetag: 05.10.2015
(51) Int. Cl.: B60N 2/66, B60N 2/70, B60N 2/58, B60N 2/90

(54) **POLSTERKÖRPERANORDNUNG FÜR EINEN FAHRZEUGSITZ**
PADDING-ARRANGEMENT FOR A VEHICLE SEAT
ARRANGEMENT D'UN ELEMENT DE REMBOURRAGE POUR UN SIEGE DE VEHICULE

(30) Priorität: 08.12.2014 DE 102014225113
(43) Veröffentlichungstag der Anmeldung: 15.06.2016
(73) Patentinhaber: Benecke-Kaliko AG, 30419 Hannover (DE)
(72) Erfinder: Schüller, Markus, 31632 Husum (DE)
(74) Vertreter: Kilsch, Armin Ralph

(56) Entgegenhaltungen:
- WO-A1-03/074885
- WO-A2-03/013907
- DE-A1- 10 322 074
- DE-A1-102009 012 616
- DE-C1- 3 537 846
- US-A- 5 190 348

## Beschreibung

Die Erfindung betrifft einen Polsterkörper für einen Fahrzeugsitz, beispielsweise ein Lordose-Stützkissen und/oder ein Seitenhaltkissen, welcher mit einem Fluid befüllbar sowie zwischen einem Sitzbezugmaterial und einem Polstermaterial oder zwischen dem Polstermaterial und einem Fahrzeugsitzgestell angeordnet ist, und welcher aus einem ersten, dem Sitzbezugmaterial oder dem Polstermaterial zugewandten flexiblen Kunststofffolienstück und einem zweiten, damit fluiddicht verbundenen, dem Polstermaterial oder dem Fahrzeugsitzgestell zugewandten zweiten flexiblen Kunststofffolienstück gebildet ist. Ein solcher Polsterköper ist in der DE 103 22 074 B4 dargestellt und beschrieben. Die Erfindung betrifft auch Verfahren zur Herstellung eines solchen Polsterkörpers.

Derartige Polsterkörper werden durch Bezugsstoffe und/oder Polstermaterial abgedeckt in Fahrzeugsitze integriert. Mittels eines Fluidbefüllungssystems, an dem sie angeschlossen sind, lassen sie sich beispielsweise mit Pressluft beaufschlagen, um den Polsterkörper gesteuert aufzublasen. Diese Polsterkörper werden in Sitzen für Kraftfahrzeuge, Luftfahrzeuge sowie andere Fahrzeuge verwendet. Sie werden bei der Herstellung der Sitze aufwendig auf das Sitzpolster oder das Fahrzeugsitzgestell aufgebracht. Dies verringert nachteilig den am Sitz zur Verfügung stehenden Bauraum und erhöht den Arbeitsaufwand bei der Sitzkomplettierung. Des Weiteren ist der herkömmliche Sitzaufbau mit Polsterkörpern empfindlich gegen Beschädigungen, die durch das Fahrzeugsitzgestell oder dessen Mechanik entstehen können.

Gleiches gilt für das in der US 5 190 348 A offenbarte selbstaufblasende Rückenstützkissen, welches einen in der Rückenlehen eines Sitzes integrierten aufblasbaren Balg aufweist, der durch eine innerhalb des Balgs wirkende federnde oder aus flexiblem Material bestehende Rückenplatte ausgedehnt werden kann. Dabei wird Luft aus der Umgebung in das durch die Federkraft entstehende Balgvolumen einsaugt. Eine von außen auf den Balg wirkende Kraft, beispielsweise die durch eine an den Sitz angelehnte Person ausgeübte Kraft, komprimiert das Rückenstützkissen und damit den Balg, wodurch die Federplatte in ihre Ursprungslage soweit zurückgeführt wird, bis ein Kräfteausgleich vorhanden ist.

Vor diesem Hintergrund liegt der Erfindung die Aufgabe zugrunde, eine Polsterkörperanordnung für einen Fahrzeugsitz, beispielsweise für ein Lordose-Stützkissen und/oder ein Seitenhaltkissen vorzuschlagen, das mit einem vergleichsweise geringem Bauraum sowie geringerem Arbeitsaufwand bei der Sitzkomplettierung auskommt, und das weitgehend unempfindlich gegen Beschädigungen durch das Fahrzeugsitzgestell oder dessen Mechanik ist. Außerdem soll ein Verfahren zum Herstellen einer solchen Polsterkörperanordnung vorgeschlagen werden.

Gelöst wird diese Aufgabe durch eine Polsterkörperanordnung mit den Merkmalen des Anspruchs 1, sowie durch zwei zueinander alternative Verfahren gemäß den unabhängigen Verfahrensansprüchen. Vorteilhafte Weiterbildungen sind den jeweils zugeordneten Unteransprüchen entnehmbar.

Die Erfindung betrifft vorrichtungsbezogen zunächst einen Polsterkörper für einen Fahrzeugsitz, beispielsweise ein Lordose-Stützkissen und/oder ein Seitenhaltkissen, welcher mit einem Fluid befüllbar sowie zwischen einem Sitzbezugmaterial und einem Polstermaterial oder zwischen dem Polstermaterial und einem Fahrzeugsitzgestell angeordnet ist, und welcher aus einem ersten, dem Sitzbezugmaterial oder dem Polstermaterial zugewandten flexiblen Kunststofffolienstück und einem zweiten, damit fluiddicht verbundenen, dem Polstermaterial oder dem Fahrzeugsitzgestell zugewandten zweiten flexiblen Kunststofffolienstück gebildet ist. Gemäß der Erfindung ist bei diesem Polsterkörper zur Lösung der vorrichtungsbezogenen Aufgabe vorgesehen, dass das erste Kunststofffolienstück vollflächig oder in Bereichen mit dem Sitzbezugmaterial oder dem Polstermaterial verklebt oder verschweißt ist, und dass das zweite Kunststofffolienstück nur in den Bereichen, die der geforderten Umfangskontur der Ränder des Polsterkörpers entsprechen, mit dem ersten Kunststofffolienstück verklebt oder verschweißt ist.

Der Polsterkörper ist somit mit dem Sitzbezugmaterial oder dem Polstermaterial fest verbunden, bevor dieses zum Nähen und Überziehen des Fahrzeugsitzgestells konfektioniert wird. Dadurch verringert sich der Bauraum, der am Fahrzeugsitz für den Polsterkörper erforderlich ist, ebenso wie der Arbeitsaufwand bei der Sitzkomplettierung, da der Polsterkörper nicht mehr getrennt von den übrigen Elementen des Fahrzeugsitzes montiert werden muss. Auch die Gefahr der Beschädigungen, die durch das Fahrzeugsitzgestell oder deren Mechanik entstehen können, ist verringert, da der Polsterkörper durch das Sitzbezugmaterial positioniert und gehalten wird, wenn er zwischen dem Sitzbezugmaterial und dem Polstermaterial angeordnet ist.

Erfindungsgemäß wird das erste Kunststofffolienstück vollflächig mit dem Sitzbezugmaterial oder dem Polstermaterial verklebt oder verschweißt, oder wird das erste Kunststofffolienstück nur in einem Bereich entsprechend der geforderten Umfangskontur mit dem Sitzbezugmaterial oder dem Polstermaterial verklebt oder verschweißt. In beiden Fällen ist eine sichere Befestigung des Polsterkörpers am Sitzbezugmaterial oder dem Polstermaterial gegeben, nachdem das zweite Kunststofffolienstück mit dem ersten Kunststofffolienstück fluiddicht verklebt oder verschweißt ist.

Gemäß einer Ausführungsform kann vorgesehen sein, dass das erste Kunststofffolienstück und das zweite Kunststofffolienstück flach übereinander gelegte und zusammenhängende Bestandteile einer Schlauchbahn sind, dass diese Schlauchbahn wenigstens im Bereich ihrer Längsränder mit einer Sitzbezugmaterialbahn oder einer Polstermaterialbahn verklebt oder verschweißt ist, und dass die beiden flach übereinander gelegten Kunststofffolienstücke der Schlauchbahn wenigstens in Bereichen quer zur Längserstreckung der Schlauchbahn oder zur Polstermaterialbahn entsprechend der geforderten Umfangskontur miteinander verklebt oder verschweißt sind. Vorteilhaft daran ist, dass für eine fluiddichte Verbindung zwischen dem ersten und dem zweiten Kunststofffolienstück nur ein Verkleben oder Verschweißen in Bereichen quer zur Sitzmaterialbahn oder der Polstermaterialbahn entsprechend der geforderten Umfangskontur erforderlich ist, wodurch eine rationelle Fertigung der mit dem Sitzbezugmaterial oder dem Polstermaterial verbundenen Polsterkörper ermöglicht wird.

Weiter ist bevorzugt vorgesehen, das erste Kunststofffolienstück mit einem mehrschichtigen Sitzbezugmaterial aus einem Gewebe und einem damit vollflächig verbundenen Abstandsgewirke verklebt oder verschweißt ist.

Gemäß einer anderen Ausführungsform kann vorgesehen ein, dass das erste Kunststofffolienstück mit einem mehrschichtigen Sitzbezugmaterial, bestehend aus einer Deckschicht, einer Schaumstoffschicht, einem Gewebe und einem Abstandsgewirke, die vollflächig miteinander verbunden sind, verklebt oder verschweißt ist. Die Deckschicht kann dabei aus einem Gewebe, aus Sitzkunstleder oder aus echtem Leder bestehen.

Die eingangs erwähnte Aufgabe wird des Weiteren gelöst durch ein Verfahren zum Herstellen einer Polsterkörperanordnung für einen Fahrzeugsitz mit den folgenden Schritten:
- Vorbereiten eines Sitzbezugmaterials oder eines Polstermaterials;
- Vorbereiten eines ersten flexiblen Kunststofffolienstücks;
- Vollflächiges oder bereichsweises Verkleben oder Verschweißen des ersten Kunststofffolienstücks mit dem Sitzbezugmaterial oder dem Polstermaterial;
- Vorbereiten eines zweiten flexiblen Kunststofffolienstücks;
- Fluid- bzw. Gasdichtes Verkleben oder Verweißen des zweiten Kunststofffolienstücks mit dem ersten Kunststofffolienstück nur im Bereich einer geforderten Umfangskontur des Polsterkörpers;
- Konfektionieren des Sitzbezugmaterials oder des Polstermaterials mit dem damit verklebten oder verschweißten Polsterkörper zum Fertigstellen des Fahrzeugsitzes.

Gemäß einem dazu alternativen Verfahren zur Herstellung einer Polsterkörperanordnung für einen Fahrzeugsitz sind die folgenden Schritte notwendig:
- Vorbereiten einer Sitzbezugmaterialbahn oder einer Polstermaterialbahn;
- Vorbereiten einer ersten flexiblen Kunststofffolienbahn;
- Verkleben oder Verschweißen wenigstens der Längsränder der ersten flexiblen Kunststofffolienbahn mit der Sitzbezugmaterialbahn oder der Polstermaterialbahn taktweise oder im Durchlauf;
- Vorbereiten einer zweiten flexiblen Kunststofffolienbahn;
- Fluid- bzw. Gasdichtes Verkleben oder Verschweißen der zweiten Kunststofffolienbahn mit der ersten Kunststofffolienbahn entsprechend der geforderten Umfangskontur des Polsterkörpers taktweise oder im Durchlauf;
- Ausstanzen des Polsterkörpers aus der Sitzbezugmaterialbahn oder der Polstermaterialbahn mit den damit verklebten oder verschweißten Kunststofffolienbahnen;
- Konfektionieren des Sitzbezugmaterials oder des Polstermaterials mit dem damit verklebten oder verschweißten Polsterkörper zum Fertigstellen des Fahrzeugsitzes.

Sofern anstelle einzelner Kunststofffolienstücke oder Kunststofffolienbahnen eine Schlauchbahn aus einer Kunststofffolie genutzt wird, bei welcher das erste und das zweite flexible Kunststofffolienstück sozusagen miteinander verbundene Bestandteile der Schlauchbahn sind, kann die Herstellung und Verbindung der Polsterkörper mit der Sitzbezugmaterialbahn in einem etwas anderen kontinuierlichen Herstellprozess erfolgen. Hierzu sind die folgenden Verfahrenschritte notwendig:
- Vorbereiten einer Schlauchbahn aus einer flexiblen Kunststofffolie;
- Flachlegen der Schlauchbahn zum Bilden von zwei übereinander liegenden Schichten der Schlauchbahn;
- Verkleben oder Verschweißen wenigstens der Längsränder der Schlauchbahn mit der Sitzbezugmaterialbahn oder der Polstermaterialbahn taktweise oder im Durchlauf;
- Fluid- bzw. Gasdichtes Verkleben oder Verweißen der übereinander liegenden Schichten der Schlauchbahn wenigstens quer zur Längserstreckung der Schlauchbahn entsprechend der geforderten Umfangskontur des Polsterkörpers taktweise oder im Durchlauf.

Als weiterer Herstellschritt kann vorgesehen sein, dass gleichzeitig mit oder unmittelbar nach dem Verkleben oder Verweißen der übereinander liegenden Schichten der Schlauchbahn ein Ausstanzen des mit der Sitzbezugmaterialbahn verbundenen Polsterkörpers erfolgt.

Die Erfindung wird nachstehend anhand eines in der Zeichnung dargestellten Ausführungsbeispiels weiter erläutert. In der Zeichnung zeigt
- Fig. 1: einen schematischen Querschnitt durch einen mit einem Sitzbezugmaterial verklebten oder verschweißten Polsterkörper, und
- Fig. 2: eine schematische Draufsicht auf eine Sitzbezugmaterialbahn mit einem darauf angeordneten und damit verschweißten Polsterkörper.

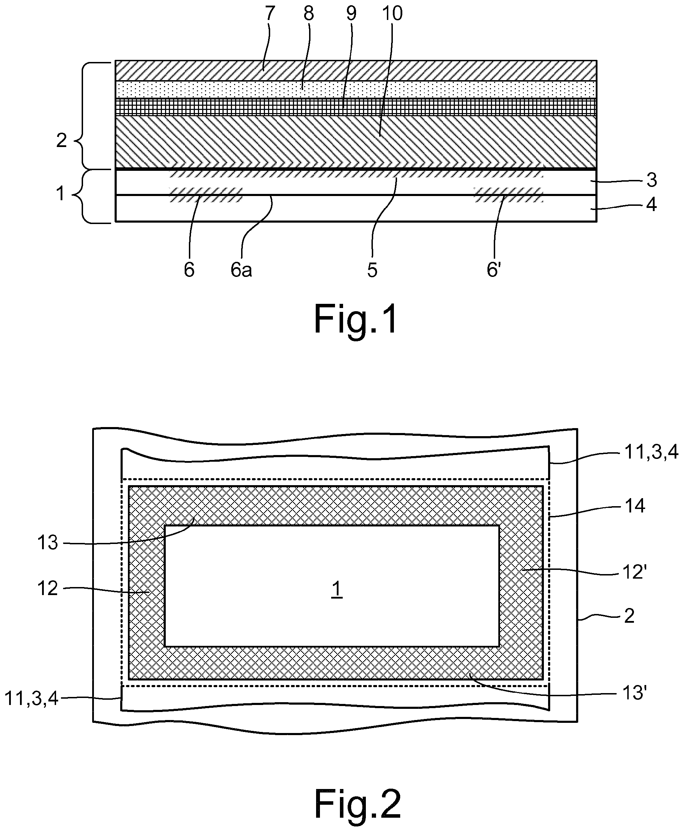

Fig. 1 zeigt demnach, wie ein Polsterkörper 1 mit einem mehrschichtigen Sitzbezugmaterial 2 vollflächig oder bereichsweise verklebt oder verschweißt ist. Der Polsterkörper 1 besteht im Wesentlichen aus einem ersten flexiblen Kunststofffolienstück 3 und einem zweiten flexiblen Kunststofffolienstück 4, die fluid- bzw. gasdicht miteinander verbunden sind und zwischen sich einen mittels eines Fluids oder Gas beaufschlagbaren Raum bilden. Dieser Raum ist über ein nicht dargestelltes Ventil befüllbar. Zur Bildung des Schichtaufbaus mit dem Polsterkörper 1 und dem Sitzbezugmaterial 2 wird zunächst eine Verklebung oder eine Verschweißung 5 des ersten flexiblen Kunststofffolienstück 3 des Polsterkörpers 1 mit dem Sitzbezugmaterial 2 durchgeführt, welche vollflächig oder bereichsweise erfolgen kann.

Das Sitzbezugmaterial 2 besteht aus einer ganz oben angeordneten Deckschicht 7, die aus einem strapazierfähigen Gewebe oder aus Kunstleder oder auch aus Leder gebildet sein kann. Diese Deckschicht 7 ist an ihrer Unterseite mit einer Schaumstoffschicht 8 versehen sowie anschließend mit einem leichten Gewebe 9 kaschiert. Dieses leichte Gewebe 9 ist dann an seiner deckschichtfernen Seite mit einem dickeren Abstandsgewirke 10 verbunden, welches an seiner deckschichtfernen Seite mit dem ersten flexiblen Kunststofffolienstück 3 verklebt oder verschweißt ist. Der Bereich 5 der Klebung oder Schweißung des ersten flexiblen Kunststofffolienstücks 3 mit dem Abstandsgewirke 10 ist durch Schrägstriche symbolisiert.

Die schematische Schnittdarstellung gemäß Fig. 1 zeigt zwei seitliche Bereiche 6, 6' einer Klebung oder Schweißung, in denen das zweite flexible Kunststofffolienstück 4 mit dem ersten flexiblen Kunststofffolienstück 3 verbunden ist. Diese Bereiche 6, 6' verlaufen im Wesentlichen entlang der beiden Längsränder 12, 12' der Kunststofffolienstücke 3, 4 beziehungsweise des Polsterkörpers 1. Dazwischen ist ein Bereich 6a ohne Verklebung oder Verschweißung des ersten flexiblen Kunststofffolienstücks 3 mit dem zweiten flexiblen Kunststofffolienstück 4 dargestellt, der den mit Fluid oder Gas befüllbaren Bereich des Polsterkörpers 1 markiert.

Die in Fig. 1 dargestellte Einheit aus dem Polsterkörper 1 und dem Sitzbezugmaterial 2 lässt sich aus entsprechend der geforderten Umfangskontur des Sitzbezugmaterials 2 und des Polsterkörpers 1 in Form von Zuschnitten verarbeiten, jedoch wird es bevorzugt, ein kontinuierliches Herstellverfahren anzuwenden, welches anhand der Fig. 2 erläutert wird. Das Material für den Polsterkörper 1, nämlich die erste Kunststofffolie 3 und die zweite Kunststofffolie 4, liegen hierbei in Form einer Schlauchbahn 11 vor, und das Sitzbezugmaterial 2 ist in dieser Produktionsphase ebenfalls bahnförmig ausgebildet.

Zum Herstellen und Verbinden des Polsterkörpers 1 mit dem Sitzbezugmaterial 2 wird die Schlauchbahn 11 über der Sitzbezugmaterialbahn 2 flach ausgebreitet, so dass dadurch das erste Kunststofffolienstück 3 und das zweite Kunststofffolienstück 4 sowie die Sitzbezugmaterialbahn 2 in der in Fig. 1 erkennbaren Weise aufeinander liegen. Die Schlauchbahn 11 wird, wie in Fig. 2 dargestellt, wenigstens an ihren beiden parallelen Längsrändern 12, 12' sowie in zwei zueinander beabstandeten Bereichen 13, 13' quer zur Längserstreckung der Schlauchbahn 11 mit dem Sitzbezugmaterial 2 verklebt oder verschweißt. Vorzugsweise erfolgt das Verkleben oder das Verschweißen der beiden flach übereinander liegenden Folienbahnen 3, 4 der Schlauchbahn 11 und des Sitzbezugmaterials 2 gleichzeitig, so dass der Polsterkörper 1 zusammenhängend aus der Schlauchbahn 11 und der Sitzbezugmaterialbahn 2 erzeugt wird.

Anschließend wird der Polsterkörper 1 mit dem Sitzbezugmaterial 2 entsprechend der gewünschten Umfangskontur entlang einer hier gestrichelt dargestellten Stanzlinie 14 ausgestanzt, um anschließend zum Fertigstellen des Fahrzeugsitzes konfektioniert zu werden.

Es versteht sich in Kenntnis der Erfindung von selbst, dass die Fig. 2 die Herstellung eines mit Sitzbezugmaterial 2 verbundenen Polsterkörpers 1 nur schematisch zeigt, und dass die Form des mit dem Sitzbezugmaterial 2 verbundenen Polsterkörpers 1 tatsächlich sehr komplex ist, nämlich an die Form eines Fahrzeugsitzes und/oder einer Fahrzeugsitzlehne angepasst ist. Des Weiteren lässt sich der Polsterkörper 1 durch zusätzliche, geklebte oder geschweißte Bereiche unterteilen, um eine gewünschte Formgebung zu erreichen, oder um den Polsterkörper 1 in ein Lordose-Stützkissen und ein Seitenhaltkissen zu unterteilen.

Wenn die Verbindung des Polsterkörpers 1 mit dem Sitzbezugmaterial 2 durch Kleben bewirkt wird, wobei der Klebstoff vorzugsweise durch Wärme aktiviert wird, erfolgt in den Verbindungsbereichen 5, 6, 6', 12, 12', 13, 13' zunächst ein Auftrag von Klebstoff, wonach die Elemente des Polsterkörpers 1 und des Sitzbezugmaterials 2 taktweise in einer beheizten Presse oder im Durchlauf durch einen beheizten Kalander zusammengefügt werden.

Handelt es sich beim Material für den Polsterkörper 1 und beim Abstandsgewirke 10 um ein mittels Hochfrequenzschweißen verbindbares Material, genügt es, die Polsterkörper 1 mit dem Sitzbezugmaterial 2 in einer geeigneten Presse oder im Durchlauf in den gewünschten Bereichen auf Schweißtemperatur zu erwärmen und zusammenzupressen.

Als Material zur Bildung des Polsterkörpers 1 sind Elastomere besonders geeignet, die gegebenenfalls durch eine Textileinlage verstärkt sein können.

Das Sitzbezugmaterial 2 kann bereits mit einer ersten flexiblen Kunststofffolienschicht 3 beschichtet von einem Hersteller bezogen werden, wobei auch eine Kombination mit einer beheizbaren Deckschicht 7 des Sitzbezugmaterials 2 möglich ist, während die zweite Kunststofffolienschicht 4 separat zugeschnitten und in einem weiteren Arbeitsschritt fertig konfektioniert werden kann. Dies kann beispielsweise mittels einer Thermostanze geschehen, die das Sitzbezugmaterial 2 in der gewünschten Form mit dem Polsterkörper 1 ausstanzt und gleichzeitig die beiden Kunststofffolienschichten miteinander verschweißt. Dabei werden der Bereich der Stanzlinie 14 und/oder die Schweißbereiche 12, 12', 13, 13' so breit gewählt, dass ein Vernähen des Sitzbezugmaterials 2 mit dem damit verbundenen Polsterkörper 1 zum Fertigstellen des Sitzbezugs ermöglicht wird.

### Bezugzeichenliste

- 1: Polsterkörper
- 2: Sitzbezugmaterial
- 3: Erstes flexibles Kunststofffolienstück, erste Kunststofffolienbahn
- 4: Zweites flexibles Kunststofffolienstück, zweite Kunststofffolienbahn
- 5: Bereich der Klebung oder Schweißung zwischen dem ersten Kunststofffolienstück 3 und dem Sitzbezugmaterial 2
- 6, 6': Bereiche der Klebung oder Schweißung zwischen dem ersten Kunststofffolienstück und dem zweiten Kunststofffolienstück
- 6a: Bereich ohne Verklebung oder Verschweißung zwischen dem ersten Kunststofffolienstück und dem zweiten Kunststofffolienstück
- 7: Deckschicht
- 8: Schaumstoffschicht
- 9: Gewebe
- 10: Abstandsgewirke
- 11: Schlauchbahn
- 12, 12': Längsränder des Polsterkörpers 1
- 13, 13': Bereiche der Klebung oder Schweißung quer zur Längserstreckung der Schlauchbahn 11
- 14: Stanzlinie

## Patentansprüche

1. Polsterkörperanordnung für einen Fahrzeugsitz, umfassend einen Polsterkörper (1) mit einem Sitzbezugmaterial (2) und/oder mit einem Polstermaterial, wobei der Polsterkörper (1) mit einem Fluid oder Gas befüllbar und zwischen dem Sitzbezugmaterial (2) und dem Polstermaterial oder zwischen dem Polstermaterial und einem Fahrzeugsitzgestell anordenbar ist, wobei der Polsterkörper (1) aus einem ersten, dem Sitzbezugmaterial (2) oder dem Polstermaterial zugewandten flexiblen Kunststofffolienstück (3) und einem zweiten, damit fluid- bzw. gasdicht verbundenen, dem Polstermaterial oder dem Fahrzeugsitzgestell zugewandten zweiten flexiblen Kunststofffolienstück (4) gebildet ist, wobei das zweite Kunststofffolienstück (4) nur in den Bereichen (6, 6', 12, 12', 13, 13'), die der geforderten Umfangskontur der Ränder des Polsterkörpers (1) entsprechen, mit dem ersten Kunststofffolienstück (3) verklebt oder verschweißt ist, **dadurch gekennzeichnet,**
**dass** das erste Kunststofffolienstück (3) vollflächig oder in Bereichen (5, 12, 12', 13, 13') mit dem Sitzbezugmaterial (2) oder dem Polstermaterial verklebt oder verschweißt ist.

2. Polsterkörperanordnung nach Anspruch 1, **dadurch gekennzeichnet, dass** das erste Kunststofffolienstück (3) und das zweite Kunststofffolienstück (4) flach übereinander gelegte und zusammenhängende Bestandteile einer Schlauchbahn (11) sind,
dass diese Schlauchbahn (11) wenigstens im Bereich ihrer Längsränder (12, 12') mit einer Sitzbezugmaterialbahn (2) oder einer Polstermaterialbahn verklebt oder verschweißt ist,
und dass die beiden flach übereinander gelegten Kunststofffolienstücke (3, 4) der Schlauchbahn (11) wenigstens in Bereichen (13, 13') quer zur Längserstreckung der Schlauchbahn (11) oder zur Polstermaterialbahn entsprechend der geforderten Umfangskontur miteinander verklebt oder verschweißt sind.

3. Polsterkörperanordnung nach Anspruch 1 oder 2, **dadurch gekennzeichnet, dass** das erste Kunststofffolienstück (3) mit einem mehrschichtigen Sitzbezugmaterial (2) aus einem Gewebe (9) und einem damit vollflächig verbundenen Abstandsgewirke (10) verklebt oder verschweißt ist.

4. Polsterkörperanordnung nach Anspruch 1 oder 2, **dadurch gekennzeichnet, dass** das erste Kunststofffolienstück (3) mit einem mehrschichtigen Sitzbezugmaterial (2), bestehend aus einer Deckschicht (7), einem Schaumstoffschicht (8), einem Gewebe (9) und einem Abstandsgewirke (10), die vollflächig miteinander verbunden sind, verklebt oder verschweißt ist.

5. Verfahren zum Herstellen einer Polsterkörperanordnung für einen Fahrzeugsitz nach einem der Ansprüche 1 bis 4, mit den Schritten:
- Vorbereiten eines Sitzbezugmaterials (2) oder eines Polstermaterials;
- Vorbereiten eines ersten flexiblen Kunststofffolienstücks (3);
- Vollflächiges oder bereichsweises Verkleben oder Verschweißen des ersten Kunststofffolienstücks (3) mit dem Sitzbezugmaterial (2) oder dem Polstermaterial;
- Vorbereiten eines zweiten flexiblen Kunststofffolienstücks (4);
- Fluid- bzw. gasdichtes Verkleben oder Verweißen des zweiten Kunststofffolienstücks (4) mit dem ersten Kunststofffolienstück (3) nur im Bereich (12, 12', 13, 13'). einer geforderten Umfangskontur des Polsterkörpers (1);
- Konfektionieren des Sitzbezugmaterials (2) oder des Polstermaterials mit dem damit verklebten oder verschweißten Polsterkörper (1) zum Fertigstellen des Fahrzeugsitzes.

6. Verfahren zum Herstellen einer Polsterkörperanordnung für einen Fahrzeugsitz nach einem der Ansprüche 1 bis 4, mit den Schritten:
- Vorbereiten einer Sitzbezugmaterialbahn (2) oder einer Polstermaterialbahn;
- Vorbereiten einer ersten flexiblen Kunststofffolienbahn (3);
- Verkleben oder Verschweißen wenigstens der Längsränder (12, 12') der ersten flexiblen Kunststofffolienbahn (3) mit der Sitzbezugmaterialbahn (2) oder der Polstermaterialbahn taktweise oder im Durchlauf;
- Vorbereiten einer zweiten flexiblen Kunststofffolienbahn (4);
- Fluid- bzw. gasdichtes Verkleben oder Verschweißen der zweiten Kunststofffolienbahn (4) mit der ersten Kunststofffolienbahn (3) entsprechend der geforderten Umfangskontur des Polsterkörpers (1) taktweise oder im Durchlauf;
- Ausstanzen des Polsterkörpers (1) aus der Sitzbezugmaterialbahn (2) oder der Polstermaterialbahn mit den damit verklebten oder verschweißten Kunststofffolienbahnen (3, 4);
- Konfektionieren des Sitzbezugmaterials (2) oder des Polstermaterials mit dem damit verklebten oder verschweißten Polsterkörper (1) zum Fertigstellen des Fahrzeugsitzes.

7. Verfahren nach Anspruch 6 mit den zusätzlichen Schritten:
- Vorbereiten einer Schlauchbahn (11) aus einer flexiblen Kunststofffolie (3, 4);
- Flachlegen der Schlauchbahn (11) zum Bilden von zwei übereinander liegenden Schichten der Schlauchbahn (11);
- Verkleben oder Verschweißen wenigstens der Längsränder (12, 12') der Schlauchbahn (11) mit der Sitzbezugmaterialbahn (2) oder der Polstermaterialbahn taktweise oder im Durchlauf;
- Fluid- bzw. gasdichtes Verkleben oder Verweißen der übereinander liegenden Schichten der Schlauchbahn (11) wenigstens quer (13, 13') zur Längserstreckung der Schlauchbahn (11) entsprechend der geforderten Umfangskontur des Polsterkörpers (1) taktweise oder im Durchlauf.

8. Verfahren nach Anspruch 7, **dadurch gekennzeichnet, dass** gleichzeitig mit oder unmittelbar nach dem Verkleben oder Verweißen der übereinander liegenden Schichten der Schlauchbahn (11) ein Ausstanzen des Polsterkörpers (1) erfolgt.

## Claims

1. Padding arrangement of a vehicle seat, comprising a padding element (1) with a seat cover material (2) and/or with a padding material, wherein the padding element (1) can be filled with a fluid or gas and can be arranged between the seat cover material (2) and the padding material or between the padding material and a vehicle seat frame, wherein the padding element (1) is formed from a first flexible plastics sheeting piece (3) facing the seat cover material (2) or the padding material and from a second flexible plastics sheeting piece (4) connected to the plastics sheeting piece (3) in a fluid- or gas-tight manner and facing the padding material or the vehicle sheet frame, wherein the second plastics sheeting piece (4) is adhesively bonded or welded to the first plastics sheeting piece (3) only in the regions (6, 6', 12, 12', 13, 13') which correspond to the required circumferential contour of the edges of the padding element (1), **characterized in that** the first plastics sheeting piece (3) is adhesively bonded or welded to the seat cover material (2) or to the padding material over the full surface area or in regions (5, 12, 12', 13, 13').

2. Padding arrangement according to Claim 1, **characterized in that** the first plastics sheeting piece (3) and the second plastics sheeting piece (4) are parts of a tubular web (11) that are placed flat one above the other and are connected, **in that** said tubular web (11) is adhesively bonded or welded at least in the region of its longitudinal edges (12, 12') to a seat cover material web (2) or a padding material web, and **in that** the two plastics sheeting pieces (3, 4), which are placed flat one above the other, of the tubular web (11) are adhesively bonded or welded to each other at least in regions (13, 13') transversely with respect to the longitudinal extent of the tubular web (11) or to the padding material web in accordance with the required circumferential contour.

3. Padding arrangement according to Claim 1 or 2, **characterized in that** the first plastics sheeting piece (3) is adhesively bonded or welded to a multilayered seat cover material (2) made of a woven fabric (9) and a spacer knit (10) connected thereto over the full surface area.

4. Padding arrangement according to Claim 1 or 2, **characterized in that** the first plastics sheeting piece (3) is adhesively bonded or welded to a multilayered seat cover material (2) consisting of a top layer (7), a foam layer (8), a woven fabric (9) and a spacer knit (10), which are connected to one another over the full surface area.

5. Method for producing a padding arrangement for a vehicle seat according to one of Claims 1 to 4, comprising the steps of:
- providing a seat cover material (2) or a padding material;
- providing a first flexible plastics sheeting piece (3);
- adhesively bonding or welding the first plastics sheeting piece (3) to the seat cover material (2) or to the padding material over the full surface area or in regions;
- providing a second flexible plastics sheeting piece (4);
- adhesively bonding or welding the second plastics sheeting piece (4) to the first plastics sheeting piece (3) in a fluid- or gas-tight manner only in the region (12, 12', 13, 13') of a required circumferential contour of the padding element (1) ;
- assembling the seat cover material (2) or the padding material with the padding element (1) adhesively bonded or welded thereto in order to complete the vehicle seat.

6. Method for producing a padding arrangement for a vehicle seat according to one of Claims 1 to 4, comprising the steps of:
- providing a seat cover material web (2) or a padding material web;
- providing a first flexible plastics sheeting web (3) ;
- adhesively bonding or welding at least the longitudinal edges (12, 12') of the first flexible plastics sheeting web (3) to the seat cover material web (2) or to the padding material web intermittently or continuously;
- providing a second flexible plastics sheeting web (4) ;
- adhesively bonding or welding the second plastics sheeting web (4) to the first plastics sheeting web (3) in a fluid- or gas-tight manner in accordance with the required circumferential contour of the padding element (1) intermittently or continuously;
- punching the padding element (1) out of the seat cover material web (2) or out of the padding material web with the plastics sheeting webs (3, 4) adhesively bonded or welded thereto;
- assembling the seat cover material (2) or the padding material with the padding element (1) adhesively bonded or welded thereto in order to complete the vehicle seat.

7. Method according to Claim 6, comprising the additional steps of:
- preparing a tubular web (11) from a flexible plastics sheeting (3, 4);
- placing the tubular web (11) flat in order to form two layers of the tubular web (11) lying one above the other;
- adhesively bonding or welding at least the longitudinal edges (12, 12') of the tubular web (11) to the seat cover material web (2) or to the padding material web intermittently or continuously;
- adhesively bonding or welding the layers of the tubular web (11), which lie one above the other, in a fluid- or gas-tight manner at least transversely (13, 13') with respect to the longitudinal extent of the tubular web (11) in accordance with the required circumferential contour of the padding element (1) intermittently or continuously.

8. Method according to Claim 7, **characterized in that** the padding element (1) is punched out simultaneously with, or immediately after, the adhesive bonding or welding of the layers of the tubular web (11) lying one above the other.

## Revendications

1. Ensemble de corps de coussin destiné à un siège de véhicule et comprenant un corps de coussin (1) pourvu d'un matériau de revêtement de siège (2) et/ou d'un matériau de rembourrage,
le corps de coussin (1) pouvant être rempli d'un fluide ou d'un gaz et pouvant être disposé entre le matériau de revêtement de siège (2) et le matériau de rembourrage ou entre le matériau de rembourrage et un cadre de siège de véhicule,
le corps de coussin (1) étant formé d'une première pièce de film de matière synthétique flexible (3) dirigée vers le matériau de revêtement de siège (2) ou le matériau de rembourrage et une deuxième pièce de film de matière synthétique flexible (4) liée à la première de manière étanche aux fluides ou aux gaz et dirigée vers le matériau de rembourrage ou le cadre de siège de véhicule,
la deuxième pièce de film de matière synthétique (4) étant collée ou soudée à la première pièce de film de matière synthétique (3) uniquement dans les régions (6, 6', 12, 12', 13, 13') qui correspondent au contour initial requis des bords du corps de coussin (1), **caractérisé en ce que**
la première pièce de film de matière synthétique (3) est collée ou soudée au matériau de revêtement de siège (2) ou au matériau de rembourrage sur toute sa surface ou dans les régions (5, 12, 12', 13, 13').

2. Ensemble de corps de coussin selon la revendication 1, **caractérisé en ce que**
la première pièce de film de matière synthétique (3) et la deuxième pièce de film de matière synthétique (4) sont des composants superposés à plat et liés d'une bande tubulaire (11),
**en ce que** cette bande tubulaire (11) est collée ou soudée à une bande de matériau de revêtement de siège (2) ou une bande de matériau de rembourrage au moins dans la région de ses bords longitudinaux (12, 12'),
et **en ce que** les deux pièces de film de matière synthétique (3, 4) superposées à plat de la bande tubulaire (11) sont collées ou soudées ensemble au moins dans les régions (13, 13') transversales à l'extension longitudinale de la bande tubulaire (11) ou à la bande de matériau de rembourrage conformément au contour périphérique requis.

3. Ensemble de corps de coussin selon la revendication 1 ou 2, **caractérisé en ce que** la première pièce de film de matière synthétique (3) est collée ou soudée à un matériau de revêtement de siège multicouche (2) comprenant un tissu (9) et un tricot d'espacement (10) relié à celui-ci sur toute la surface.

4. Ensemble de corps de coussin selon la revendication 1 ou 2, **caractérisé en ce que** la première pièce de film de matière synthétique (3) est collée ou soudée à un matériau de revêtement de siège multicouche (2) comprenant une couche de revêtement (7), une couche de mousse (8), un tissu (9) et un tricot d'espacement (10) qui sont reliés entre eux sur toute la surface.

5. Procédé de fabrication d'un ensemble de corps de coussin destiné à un siège de véhicule selon l'une des revendications 1 à 4, le procédé comprenant les étapes suivantes :
- préparer un matériau de revêtement de siège (2) ou un matériau de rembourrage ;
- préparer une première pièce de film de matière synthétique flexible (3) ;
- coller ou souder la première pièce de film de matière synthétique (3) au matériau de revêtement de siège (2) ou au matériau de rembourrage sur toute la surface ou par endroits ;
- préparer une deuxième pièce de film de matière synthétique flexible (4) ;
- coller ou souder de manière étanche aux fluides ou aux gaz la deuxième pièce de film de matière synthétique (4) à la première pièce de film de matière synthétique (3) uniquement dans la région (12, 12', 13, 13') d'un contour périphérique requis du corps de coussin (1) ;
- confectionner le matériau de revêtement de siège (2) ou le matériau de rembourrage avec le corps de coussin (1) collé ou soudé à celui-ci pour terminer le siège de véhicule.

6. Procédé de fabrication d'un ensemble de corps de coussin destiné à une siège de véhicule selon l'une des revendications 1 à 4, le procédé comprenant les étapes suivantes :
- préparer une bande de matériau de revêtement de siège (2) ou une bande de matériau de rembourrage ;
- préparer une première bande de film de matière synthétique flexible (3) ;
- coller ou souder au moins les bords longitudinaux (12, 12') de la première bande de film de matière synthétique flexible (3) à la bande de matériau de revêtement de siège (2) ou à la bande de matériau de rembourrage de manière cyclique ou continue ;
- préparer une deuxième bande de film de matière synthétique flexible (4) ;
- coller ou souder de manière étanche aux fluides ou aux gaz la deuxième bande de film de matière synthétique (4) à la première bande de film de matière synthétique (3) suivant le contour périphérique requis du corps de coussin (1) de manière cyclique ou continue ;
- découper le corps de coussin (1) de la bande de matériau de revêtement de siège (2) ou de la bande de matériau de rembourrage avec les bandes de film de matière synthétique (3, 4) collées ou soudées à celui-ci ;
- confectionner le matériau de revêtement du siège (2) ou le matériau de rembourrage au corps de coussin (1) collé ou soudé à celui-ci pour terminer le siège de véhicule.

7. Procédé selon la revendication 6 comprenant les étapes supplémentaires suivantes :
- préparer une bande tubulaire (11) à partir d'un film de matière synthétique flexible (3, 4) ;
- poser à plat la bande tubulaire (11) pour former deux couches superposées de la bande tubulaire (11) ;
- coller ou souder au moins les bords longitudinaux (12, 12') de la bande tubulaire (11) à la bande de matériau de revêtement de siège (2) ou à la bande de matériau de rembourrage de manière cyclique ou continue ;
- coller ou souder de manière étanche aux fluides ou aux gaz les couches superposées de la bande tubulaire (11) au moins transversalement (13, 13') à l'extension longitudinale de la nappe tubulaire (11) selon le contour périphérique requis du corps de coussin (1) de manière cyclique ou continue.

8. Procédé selon la revendication 7, **caractérisé en ce qu'**un découpage du corps de coussin (1) est effectué simultanément ou immédiatement après le collage ou le soudage des couches superposées de la bande tubulaire (11).
